# EUROPEAN PATENT APPLICATION

(11) **EP 4 509 958 A1**
(43) Date of publication of application: **19.02.2025**
(21) Application number: 23275119.8
(22) Date of filing: 16.08.2023
(51) Int. Cl.: G06F 3/01, G06F 3/03, B64D 43/00

(54) **A SYSTEM AND METHOD FOR TRACKING MOVEMENT OF A USER**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

According to an aspect of the present invention there is provided a method of providing tracking data to a user of a platform in an environment, wherein the platform has associated therewith one or more input and output devices configured to track one or more variables of data associated with the user, the platform, or the environment; to generate the tracking data; and to provide an output representing the tracking data, the method comprising: processing data received from one or more input devices to determine tracking data relating to a relative position of the user to at least one of the platform and the environment, wherein an input data relates to a hand position associated with a use by the user of a platform-based controller, wherein the hand position is used to corroborate the validity of one or more alternative inputs of the one or more input devices; processing the input data to provide output data to be represented to the user.

## Description

### FIELD

The present invention relates to a system and method for tracking movement of a user, particularly, but not exclusively, to tracking movement of a user located in a vehicle.

### BACKGROUND

Tracking of an object and the determination and tracking of orientation of the object is known in many scenarios. Head or helmet-mounted display systems incorporating a tracking system to provide head or helmet orientation data for use in positioning display artefacts in a display system in which the positioning of symbols or other artefacts in the display may be used. In some examples, these systems may be used by a user travelling on or within a moveable platform, such as an aircraft or other vehicle.

In some situations, such systems may be subject to buffeting or similar rapid induced changes in orientation when travelling on or within a moveable platform, such as an aircraft or other vehicle. This can make tracking more difficult.

Safety solutions in vehicles are often required to conform to a civil hazard classification scheme and functional safety guidance. These schemes have different levels of classification where low levels are less reliable than higher levels. In some environments, low or medium levels may be adequate and in others higher levels are essential.

In an aircraft environment, medium integrity/level solutions are generally easy to implement with currently known tracking systems and devices. An example of a medium level solution is one able to be used in a major hazard classification risk scenario.

Use of a head mounted device (HMD) as a Primary Reference typically inherits classifications of hazardous and/or catastrophic for provision of hazardously misleading information (HMI) for example for flight critical data. This drives a no single point failure requirement on to the HMD architecture. Loss of critical symbology on a single display typically remains as a minor risk. Loss of the same information on all cockpit displays including for example head down displays (HDDs) and any Get You Home instruments is typically ranked as catastrophic, but the risk is shared across the different systems. Therefore, for any single display surface, the criticality challenges tend to be for the HMI cases in which the HMD tracker contributes to all conformally displayed information.

Conventional practice utilises multiple similar helmet-based tracking solutions e.g., a dual optical tracker, to provide additional integrity but this can add weight and lead to other disadvantages.

A need exists for tracking systems and associated methods which are not encumbered by the problems exhibited in known systems and which provide a high-fidelity tracking system whatever the risk scenario.

### SUMMARY

According to an aspect of the present invention there is provided a method of providing tracking data to a user of a platform in an environment, wherein the platform has associated therewith one or more input and output devices configured to track one or more variables of data associated with the user, the platform, or the environment; to generate the tracking data; and to provide an output representing the tracking data, the method comprising: processing data received from one or more input devices to determine tracking data relating to a relative position of the user to at least one of the platform and the environment, wherein an input data relates to a hand position associated with a use by the user of a platform-based controller, wherein the hand position is used to corroborate the validity of one or more alternative inputs of the one or more input devices; processing the input data to provide output data to be represented to the user.

In an aspect there is the capturing of one or more data sources from the one or more input devices to capture the input data and the alternative input data, wherein the output is based on a combination of the input data and the alternative input data.

In an aspect the input data is captured based on a user interaction with the platform-based controller on the platform at a moment in time.

In an aspect the input data is captured from movement of the hand, fingers, or thumb in respect of the platform-based controller.

In an aspect the use by the user of the platform-based controller comprises use of one of a controller, button, touch screen or other haptic controller.

In an aspect the hand position is corroborated with the alternative input data to validate the alternative input data.

In an aspect if the hand position is not corroborated with the alternative input data the system implements one of a recalibration and a reset of the system.

In an aspect if the hand position is corroborated with the alternative input data the system implements one of a crosscheck and a recalibration.

In an aspect the input data is captured periodically based on an instruction to the user to use of the platform-based controller.

In an aspect there is the capturing of input data and alternative data relating to at least one of data imaging, illumination, sound, movement, gestures, gravitation, heat, velocity, acceleration, position and location and features present in the environment.

In an aspect providing tracking data to the user comprises at least one of displaying tracking data via a display device and providing haptic feedback.

According to a further aspect of the present invention, there is provided a system for providing tracking data to a user of a platform in an environment, wherein the platform has associated therewith one or more input and output devices configured to track one or more variables of data associated with the user, the platform, or the environment; to generate the tracking data; and to provide an output representing the tracking data, the system comprising: a processor for processing data received from one or more input devices to determine tracking data relating to a relative position of the user to at least one of the platform and the environment, wherein an input data relates to a hand position associated with a use by the user of a platform-based controller, wherein the hand position is used to corroborate the validity of one or more alternative inputs of the one or more input devices; processing the input data to provide output data to be represented to the user.

In an aspect there is one or more input devices for capturing one or more data sources from the one or more input devices to process the input data and the alternative input data, wherein the output is based on a combination of the input data and the alternative input data.

In an aspect the input data is captured based on a user interaction with the platform-based controller on the platform at a moment in time.

In an aspect the input data is captured from movement of the hand, fingers, or thumb in respect of the platform-based controller and wherein the platform-based controller comprises one of a controller, button, touch screen and other haptic controller.

In an aspect the hand position is corroborated with the alternative input data to validate the alternative input data.

In an aspect if the hand position is not corroborated with the alternative input data the system implements one of a recalibration and a reset of the system and wherein if the hand position is corroborated with the alternative input data the system implements one of a crosscheck and a recalibration.

In an aspect the input data is captured periodically based on an instruction to the user to use of the platform-based controller.

In an aspect there is capturing of input data and alternative data relating to at least one of sources of: data imaging, illumination, sound, movement, gestures, gravitation, heat, velocity, acceleration, position, location, and features present in the environment.

In an aspect providing tracking data to the user comprises at least one of displaying tracking data via a display device and a haptic feedback device.

In an aspect the system comprises at least one of a head mounted display, a head-down display, and a heads-up display.

According to a further aspect of the present invention, there is provided a head mounted display including a system of a previous aspect.

According to a further aspect of the present invention, there is provided a machine readable medium when executed on a computer is configured to implement the method of a previous aspect.

### BRIEF DESCRIPTION OF THE FIGURES

Embodiments of the invention will now be described by way of example only with reference to the figures, in which:
Figure 1 an exemplary system in accordance with an aspect of the present invention.
Figure 2 shows a representation of a helmet with components suitable for implementing the functionality in accordance with an aspect of the present invention.
Figure 3 shows a tracking and guidance system in accordance with an aspect of the present invention.
Figure 4 shows a scheme for operating the system of Figure 3.
Figure 5 is a simple flow diagram of the method in accordance with an aspect of the present invention.

### DETAILED DESCRIPTION

The present invention relates generally to a tracking system and method to accurately identify the location of a user on a platform, such as an aircraft, and all platform related instruments and control devices in the vicinity so that all necessary information can be directed to the user who can navigate and move the platform safely.

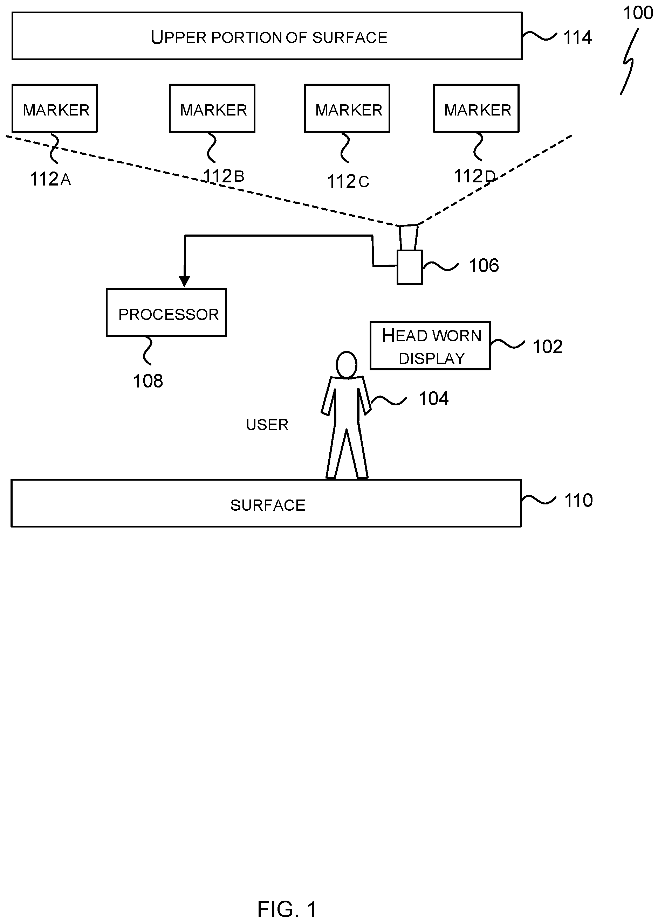

Referring now to Figure 1, a system 100 in accordance with an aspect of the present invention is shown. The system 100 comprises a head-worn display (HWD) device 102 adapted to be supported on a helmet (not shown in Figure 1) worn by a user 104. The system also includes a camera 106 and a processor 108.

Figure 1 further shows a surface 110, which may be interchangeably referred to as a platform, and comprises any given surface on which the user 104 is situated. The surface 110 may include but is not limited to a vehicle or a flight simulation device. The user 104 situated on the surface 110 wears the HWD 102. The imaging device or camera 106 may be integrated into the body of the HWD 102 or mounted at any suitable location on the HWD 102 such that it can observe numerous views and equipment, as will be described in further detail below. The camera may collect images of markers 112a, 112b, 112c, 112d disposed at predetermined locations relative to the surface 110. In Figure 1, the markers 112a, 112b, 112c, 112d are illustrated as being disposed on an upper portion 114 of the surface, it is appreciated that the markers 112a, 112b, 112c, 112d can be disposed on any suitable location on the surface 110.

The camera 106 may be integral to the HWD 102. The camera 106 may include a plurality of cameras. The cameras may include but not be limited to stereo cameras or depth cameras. In Figure 1, the camera is shown as upward facing, it is appreciated that the camera 106 can be located or positioned at any suitable location on the HWD 102 such that it is configurable to capture images of many aspects of the environment such as images relating to trackers or devices such as an opto-inertial tracker, a HMD camera tracker, a head movement tracker, an eye tracker, a hand gesture tracker, a marker tracker, a platform and attitude tracker and any other device as may be needed depending on the use requirements of the system.

The trackers may include or be sensor devices which detect and collect variables in data including imaging, illumination, sound, movement, gravitation, heat, velocity, acceleration position and location or any other attribute or any other feature present in the environment of interest. The sensors include an optical sensor; a light sensor; an audio sensor; an inertial sensor; a movement sensor; a heat sensor; a gravitational sensor; a velocity and acceleration sensor; position and location sensor etc. In the present example, the environment includes an aircraft cockpit and the environment outside the cockpit. It will be appreciated that at least some of the sensors and associated detected data may be exterior to the cockpit.

Tracking data is collected from sensors and is further used by the user to navigate the platform in the environment. Tracking data is used herein to describe data received from one or more input sources of tracking a user and any moveable elements in a fixed space, platform or the like. As indicated elsewhere the fixed place or platform may be the cockpit of a vehicle such as an aircraft. The tracking data is processed and provides output tracking data for the user which is configured to be displayed or otherwise supplied to the user. In the latter case this could include haptic feedback from a joystick or any other haptic feedback. The output tracking data further includes real world images of the user and virtual images generated by the system to represent any other output data. The representation may be in the form of symbology, real or virtual images of local controllers which may or may not move; external views outside the platform, which may be real or virtual and any other appropriate output data as the use case dictates.

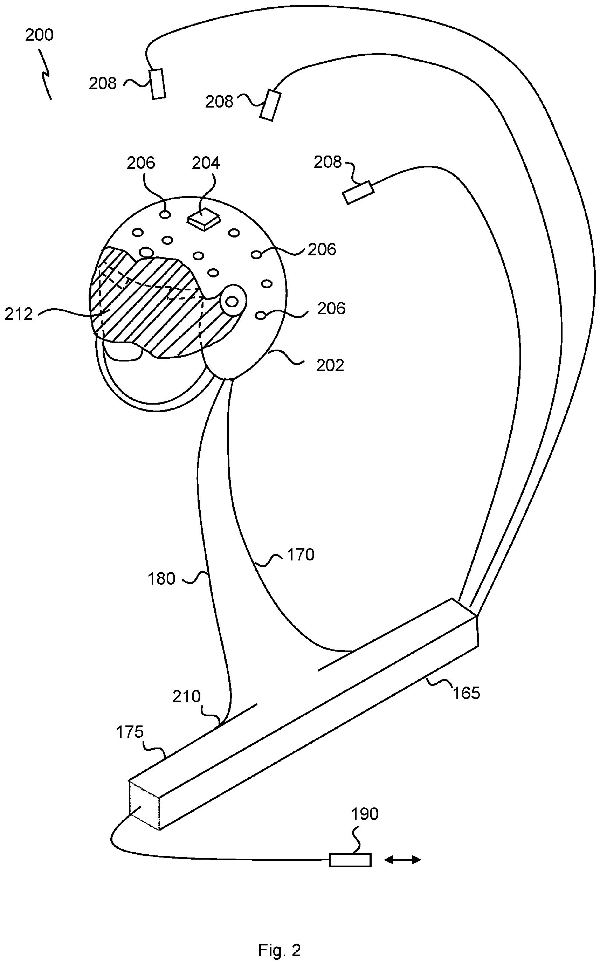

Referring to Figure 2, a helmet tracker system 200 is shown integrated with a helmet 202. The helmet tracker system comprises a one or more sensor devices 204. The sensors may include one or more inertial sensor components, one or more cameras and any other sensor which is suitable to capture features of the environment or the user which may be useful to track the user in some manner. An inertial sensor component may include three gyro elements 204, fitted to the external shell of the helmet 202. The optical helmet tracker system further comprises an arrangement of light emitting diode (LED) devices 206 integrated within or mounted upon the external shell of the helmet 202 and an arrangement of one or more cameras 208, each mounted at a fixed position, e.g., within an aircraft cockpit, such they have a line-of-sight view to at least some of the LEDs 206 at any likely orientation of the helmet 202. A system control device (controller) 210 is linked to each of the cameras 208 to receive image data resulting from the detection of light emitted by the LEDs 206 within the camera's line of sight. The controller 210 is also linked to the LEDs 206 in the helmet 202 by means of an appropriate link (which may be wired or wireless) and the controller 210 is configured such that it may control the illumination of the LEDs 206. The controller 210 is arranged, for example, to trigger a cyclic illumination of the LEDs 206 in predetermined patterns, to receive the resultant image data from the cameras 208. The controller 210 includes a digital processor programmed to implement an appropriate optical helmet tracker algorithm, or a combination of hardware and software-implemented functionality, arranged to illuminate the LEDs 206 and to interpret the resultant image data from the cameras 208 to determine helmet orientation relative to a frame of reference associated with the aircraft.

The controller 210 is further configured to implement the functionality of the overall helmet tracker system as described in further detail below. The controller 210 is linked to the helmet 202 by any appropriate means (not shown, and may be wired or wireless by way of example) and is configured to receive a rate data output from the one or more inertial sensor components, and also to convey image data received from an aircraft-installed image generation system (not shown) via an interface, to a helmet-mounted display integrated within the helmet 202 (not shown explicitly in Figure 2). Further sensor data may be received and analysed within the control which produces an output to be displayed to the user. A display comprises a helmet-mounted display system which may be a visor-projection display system, any type of HWD, or a waveguide-based display. The display is arranged to present images to the user such that they appear overlaid upon the user's view, through a visor 212, of an external scene or environment.

The controller is arranged to output measures of helmet orientation to an aircraft-installed image generation system (not shown) for use in calculating the position of certain types of symbol and data intended for display in the helmet-mounted display, as appropriate. The output is a representation for display to the user at any moment in time and changes dynamically as the vehicle, user and environment changes. The output representation is in real or close to real time. In a typical aircraft installation of a helmet-mounted display system, incorporating the hybrid helmet tracker system of the present invention, one or more further modules (not shown in Figure 2) are likely to be installed within the aircraft for the purposes of generating images for display by any display systems installed or in use on the aircraft. Such display systems may include a head-up display (HUD) and/or a head-down display (HDD) in addition to the helmet-mounted display of relevance to applications of the present invention. Such further modules are likely to be linked to a standard aircraft data bus and so have access to aircraft orientation data output by an aircraft navigation system and to data from other systems with a need to display information to the pilot. Image data including symbols and data for display on the helmet-mounted display, together with updates to aircraft orientation received over the aircraft data bus by such further modules, may be passed to the controller 210 as required.

As mentioned above, safety is an important aspect of controlling a vehicle. This is particularly the case in piloting an aircraft where the vehicle moves at high speed and is subject to many external and internal factors which can hinder the user in controlling the aircraft. Where eye position is tracked and used to calculate and draw a reticule (or other such eye position designator) onto a see-through display for the purpose of target selection and/or navigation and/or checklist completion, etc. the reticule or other such designator is dependent on a consistent flow of accurate eye position data (it is not feasible with current technology to add ancillary (e.g., inertial) secondary tracking to complement optical (e.g., IR) eye tracking). Eye position is currently detected optically in most systems, therefore in situations where the view of the eyeball is restricted (e.g., extreme +/- gravity), the present invention adopts other sources of tracker information such as head (e.g., opto-inertial) or hand (e.g., fiducial generated) which would themselves contain a level of calibration data sufficient to maintain a picture of where the eye is relative to the see through display artefacts.

The present invention in seeking to overcome problems associated with optical tracking being insufficient and other problems associated with safely tracking variables used in piloting a vehicle has identified a solution.

The invention relates to using more than one source of physical tracker data to enable compensation for the display field of regard under a range of situations where it may be compromised, for instance head worn equipment slippage (e.g. loose helmet fit). The combination of more than one source of data (e.g. eye, head, inertial, body) will enable the positioning of eye gaze, free space and conformal symbols in a multi-track system display. Examples of tracker data which could be used to achieve this include eye (eyeball profile, iris, pupil), optical and inertial head position, hand/gesture etc.

This invention describes how the positions (e.g., angular) of the selected tracked targets can be used to generate a more seamless and accurate set of position al/rotation matrices to enable accurate placement of objects of interest into the display frame of reference. Essentially, the use of multiple sources of tracking data are used to create a calibration reference (e.g., what the pilot is looking at, or where the HWD is positioned relative to known outside references) which can be used to maintain display position accuracy in the event of loss of a real time tracker data source.

At a high level the invention relates to the use of additional sensors associated with aspects such as hand and gesture tracking to augment the so called normal optical tracking processes and systems in navigating and operating a vehicle. In an aircraft cockpit, for example, as described above and in further detail below, optical tracking of the head of a user is an important aspect of determining the position and location of the user relative to a platform such as an aircraft.

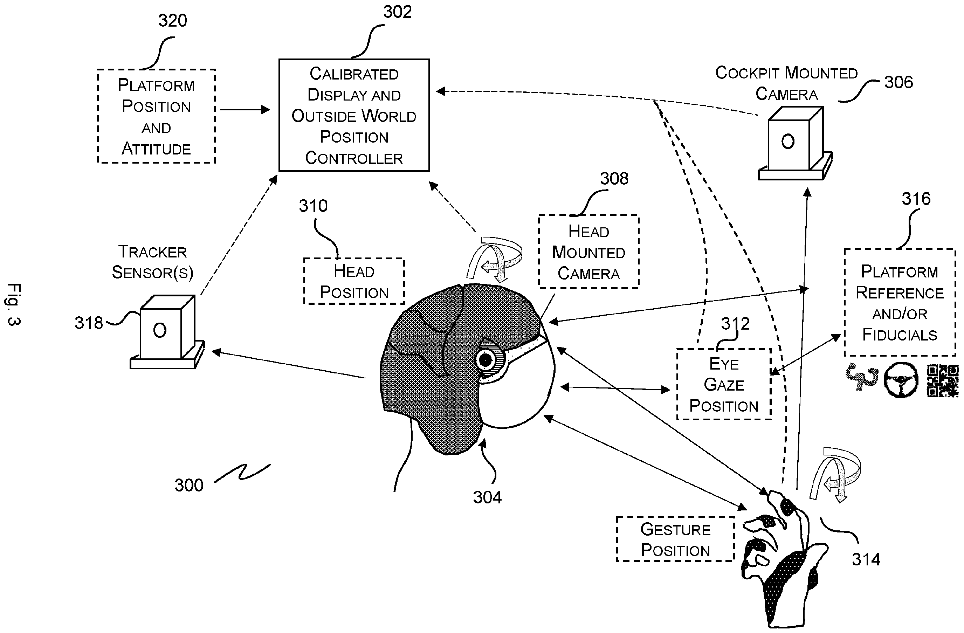

Referring to Figure 3 an overview of the present invention is shown. The system 300 includes a calibrated display and outside world position controller 302 which controls the capture of data, the processing thereof and display of data to a user 304 who in located at a position and location relative to a platform such as an aircraft cockpit. The data displayed to the user is referred to as tracking data and is used to enable the user to control the aircraft.

The user 304 is wearing a head mounted device (HMD) which may be mounted on a helmet or otherwise located relative to the user. Other suitable devices may include a head-up display (HUD), a head-down display (HDD), or any other suitable display device.

Within the vicinity of the user there are a number of cameras 306 and 308 are shown. Camera 306 is one or more cockpit mounted cameras which have a view of the user and the surroundings. Camera 308 is a head-mounted camera which may be integral to the HMD or separate therefrom and may generally be configured to provide a forward view for the user. The cameras either together or separately capture images of the user, including head position and location 310, eye gaze 312 and user gestures 314, such as hand movements. In addition, the cameras either together or separately capture images of the surroundings, including but not limited to controllers, buttons, touch screen, and body or hand gestures via a platform reference and/or fiducial markers located in any appropriate location 316.

As mentioned above there are a number of different sensors associated with the scenario and environment. These are shown in Figure 3 by single reference 310 and the inputs from all or any sensors are input to processor 302. A further input to the controller is the platform position, location, and attitude 320. The following is an example list of the data acquired by the cameras sensors and which is passed to the processor:
- Eye position relative to the HMD eye position relative to display.
- Hand position relative to HMD hand position relative to display.
- Head position relative to HMD head position relative to display.
- Combination of multiple tracker data sources to enable cross check and/or integrity improvement.
- Combination of multiple tracker sources which provide HWD, eye and hand position data relative to the outside world and the display which is crucial in a virtual cockpit using AR displays.
- Loss of a particular tracker data type e.g., gesture will result in 'fail safe' reversionary display mode e.g. revert to non-dynamic fixed display functions.
- Head mounted camera to retrieve gesture and platform data.
- Use of fiducials or cockpit and/or cabin reference to provide additional head tracker cross checking and redundancy.
- Use of eye tracking to strengthen helmet bore sighting and/or correction.

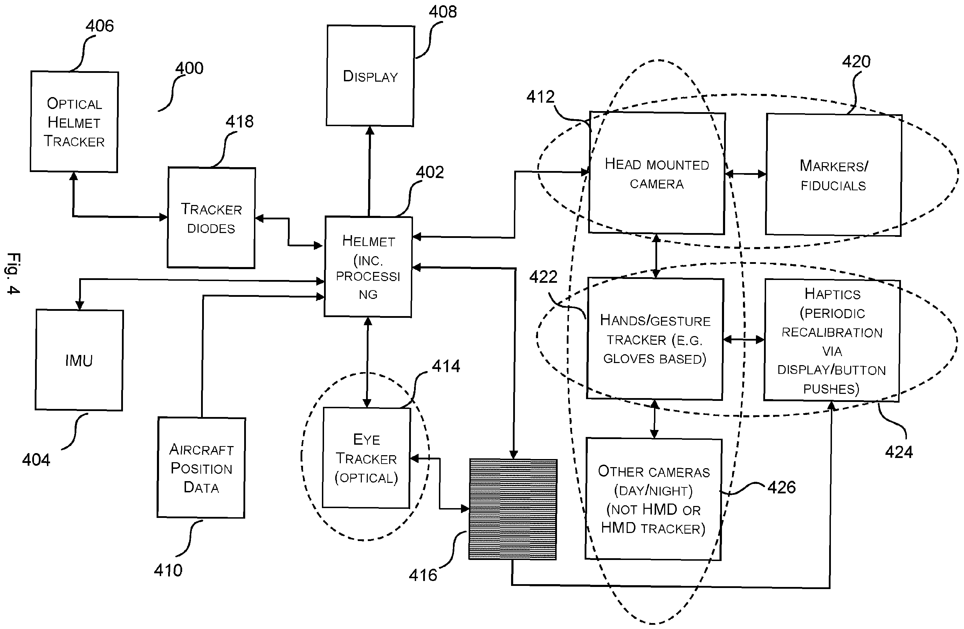

Figure 4 shows a scheme 400 of how addition of various tracking data sources above that is already used in an HMD can be used to provide more reliable head position and resultant displayed information and/or symbology. The scheme is intended to add integrity to the overall helmet related system.

The scheme 400 of Figure 4 revolves around a processing unit 402, which in this case is a helmet processing unit. The processing unit is configured to communicate with a number of different modules. These include an inertial movement unit (IMU) 404; an optical helmet tracker module 406; a display 408; an aircraft or vehicle information module 410; a head mounted camera 412; an eye tracking module 414; and a pilot or user features module 416. It will be appreciated that there could be further modules relating to tracking data and other information from different sensors in or associated with the environment inside or outside the platform.

The other sensors may include or be sensor devices which detect and collect variables in data including imaging, illumination, sound, movement, gravitation, heat, velocity, acceleration, position and location or any other attribute or any other feature present in the environment of interest. The sensors include an optical sensor; a light sensor; an audio sensor; an inertial sensor; a movement sensor; a heat sensor; a gravitational sensor; a velocity and acceleration sensor; position and location sensor, etc.

In the present example, the environment includes an aircraft cockpit and the environment outside the cockpit. It will be appreciated that at least some of the sensors and associated detected data may be exterior to the cockpit. Tracking data is used by the user to navigate the platform in the environment by the presentation of information and symbology on a suitable display.

The IMU 404 measures the movement of the head in order to enable and assist in the precise determination of head position and provides head tracking data to the processor 402.

The optical helmet tracker 406 acts as a source of head position and/or gaze relative to the aircraft. This data and information may be captured via tracker light emitting diodes (LEDs) 418 mounted on the helmet.

The display 408 is any type of display which enables the user to view at least the data from the processor 202. Generally, in the use case described the display will comprise one or more of a head-up display (HUD) and/or a head-down display (HDD) or preferably a helmet-mounted display (HMD).

A head mounted camera module 412 includes a head mounted camera which uses images of fiducials 420 to provide backup head position in a fixed space, such as the cockpit. The fiducials or markers 420 are located on the ceiling or any other point or points in the cockpit and images thereof are recorded to enable the processor to use the data to assist in determining accurate tracking data and providing optimal display of symbology and other images necessary for the user to navigate the vehicle in the environment.

The eye tracking module 414 acts as a source of eye position relative to the helmet. The display is located at a known plane to the helmet. The eye tracker is fixed to the helmet and thus can be used as an additional head position and/or gaze data point as well as to provide the means of drawing symbology artefacts to correspond with the eye position and/or head position.

The pilot or user features module 416 is used to capture data relating to gestures 422, haptics 424 and other cameras 426. The gestures may be collected from optical images and/or other sources of data such as movement detection of a hand, fingers and/or a thumb. The manner in which the gestures are collected may be linked to any interaction of the gesture with a controller or haptic 424. In addition, the gesture may be captured using for example day or night cameras as the lighting conditions dictate.

Hand and/or gesture position tracking can be achieved by multiple sources of camera, either day or night and mounted to the head, user, and/or any cockpit surfaces. The system can be configured for one or two hands. The hand gestures may be determined from sensors located on a glove or hand controller worn by the user. These gestures may be determined from images or other sensing means such as for example IMUs located on the glove or controller.

One place where the hand gestures are particularly useful is in respect of the use of controllers, buttons, touch screen or other haptic controllers in the cockpit. By operating in conjunction with a controller at a known or near known location, the hand position at the time can be considered to be known just by the fact that it is operating or cooperating with a known controller. In this way the hand position can be corroborated with other tracking data from other sources or modules to verify the validity of other sources of input tracking data. For example, the hand position can be used 'recalibrated' or 'cross checked' with other data periodically. For example, the user may periodically press a button. This is an independent (e.g., not optical) source of corroborating the validity of other input data from other sources, used for example, for calibration but not necessarily a captured hand and/or gesture position. Instead, this is an indication of where the hand is located within the cockpit at a precise moment in time. With knowledge of the hand location if there is any discrepancy, or lack of valid corroboration, in any tracking data from optical sources the system can reset the positioning. For example, if the user presses the button but the optical data places the hand a distance away from the button the system becomes aware of the anomaly and can seek to correct this.

In the case of identifying an anomaly the system may recalibrate or restart all or any optical sensors which seem to be giving erroneous data. The pressing of a button could be used as a crosscheck to determine that the hand is actually located close to the button or other controller. This is achieved by closely following pilot and/or user related data.

In the case of hand gestures the glove or hand controller may include different types of sensors. For simplicity the following is described with reference to a glove but could apply equally to a handheld controller or other controllers associated with other parts of the body. As mentioned above the glove may include sensors these may be fiducials or markers which are picked up by a camera. Other sensors may capture movement, temperature, velocity, location of position. The sensors may include IMUs or other types of movement sensor. In some cases, there may be a temperature sensor located on the glove or there may be an infra-red (IR) camera directed towards the hand which detects the hand position based on known temperature profiles. In the latter case the IR camera may capture head and/or hand data and determine relative positions thereof to crosscheck this relationship as captured by any other sensor.

In some examples of the invention the use of the hand or gesture tracking (e.g. using: hand recognition and camera data; and/or hand worn trackers) serves as an extra source of data for tracking the helmet, i.e. alongside other sources such as camera/fiducial tracking, on-helmet IMU tracking referenced against general platform IMU/GPS tracking.

In addition, the determination of the hand alone to confirm the physical location of the hand relative to the cockpit may be used. For example, as mentioned above, when a particular dashboard button is pressed, or control stick is manipulated, it will be known where the hand is at that moment in time, and this can be fed back into the system. In some circumstances this mode of operation (means of tracking hand position on its own) may be used alone without the additional tracking methods described above.

It will be appreciated that means of tracking hand position on its own could be used in combination with some or all of the other types of tracking methods and modules described above to give rise to multiple consolidated tracking data from one or more different sources. The combinations may be any combination depending on the system requirements or use case and may also depend on the nature of the high-integrity context and in particular the piloted vehicle context.

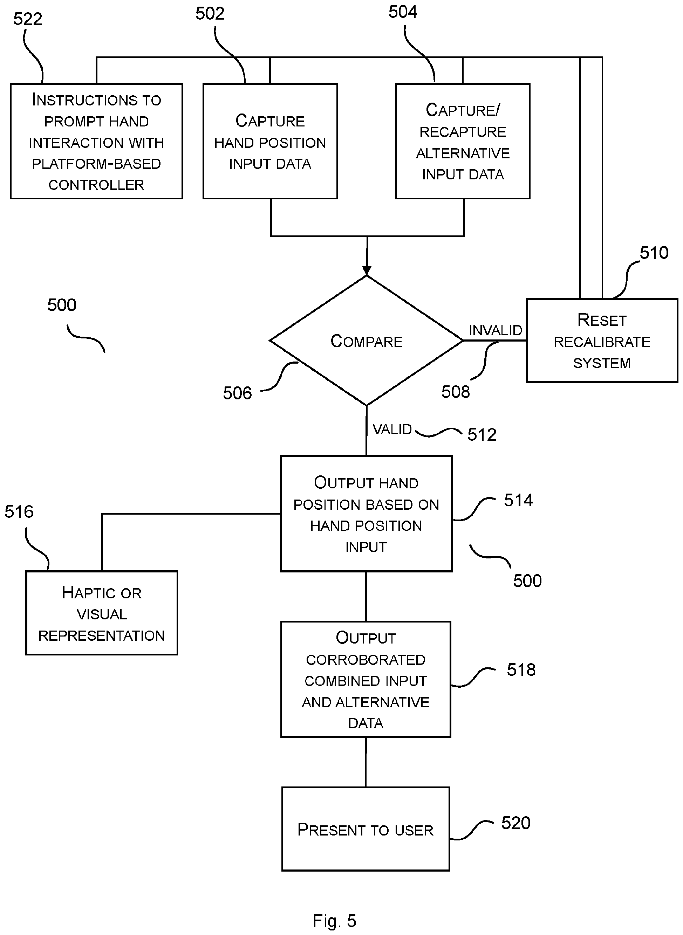

The method according to the invention may be implemented in accordance with the simplified flow diagram of Figure 5. The method 500 includes a step of capturing hand position input data 502, as described in greater detail above. In addition, the method includes the capture of alternative input data 504, again this is described in greater detail above. The captured hand position input data 502 and the captured alternative input data 504 is compared to determine if they corroborate with one another. If there is an invalid corroboration 508 the method causes a reset or recalibration of the system 510 and the method returns to recapture the alternative input data 504 and if necessary, the captured hand position input data 502. If the corroboration is valid 512 the method proceeds to output the hand position based on the captured hand position input data 514. The output may be a haptic or visual representation presented to the user 516. The method may further output corroborated combined output data 518 based on the captured hand position input data 502 and the captured alternative input data 504. This is then presented to the user 520 via at least one of a display device and a haptic feedback device. The display device may comprise one or more of a head mounted display (HMD), a head-down display (HDD), and a heads-up display (HUD).

In some situations, the user may receive a prompt or instruction to interact with one of the platform-based controllers 522. This may be a specified controller or not as the use case dictates. The instruction may be periodic and act as a predetermined crosscheck process for the different input sources and devices. In addition, the prompt may be based on an invalid corroboration feedback so that the input data from the captured hand position input data 502 and the captured alternative input data 504 is simultaneous and serves as a known determination of the hand at a particular moment in time. This may be accomplished using timestamping or the like.

It is an important aspect of the present invention that in many use cases the security requirements will be of high importance. In this context the use of tracking data could result in a user losing control of a vehicle potentially resulting in a loss of life of the user and/or other people in the vicinity of the failure. In addition, there may be substantial loss of property, for example the aircraft, other vehicle, buildings and the like. As a result, a combination of consolidated data for the user must be of sufficient integrity to safely navigate the vehicle without accident. In this context the consolidated data comprises the data necessary to meet the safety requirement of any use case. This is a very different consideration than the use of tracking devices in other situations, for example, where safety and loss are not real.

The present invention may be in the form of a system, a device, a method or computer media executed on a computer. The reference to optical is intended to include wavelengths that extend beyond the visible spectrum and any sensors may be adapted accordingly.

In the example shown the scenario is an aircraft and associated cockpit. It will be appreciated that this invention could be used in other scenarios.

## Claims

1. A method (400, 500) of providing tracking data to a user (104) of a platform (110) in an environment, wherein the platform has associated therewith one or more input and output devices (402, 404, 406, 408, 410, 412, 414, 416, 418, 420, 422, 424, 426) configured to track one or more variables of data associated with the user (320, 302, 306, 316, 312, 314, 308, 310), the platform, or the environment; to generate the tracking data; and to provide an output (518, 520) representing the tracking data, the method comprising:
processing data received from one or more input devices (402, 404, 406, 410, 412, 414, 416, 418, 420, 422, 424, 426) to determine tracking data relating to a relative position of the user to at least one of the platform and the environment, wherein an input data relates to a hand position (502, 514) associated with a use by the user of a platform-based controller, wherein the hand position is used to corroborate (518) the validity of one or more alternative inputs of the one or more input devices (402, 404, 406, 410, 412, 414, 416, 418, 420, 422, 424, 426);
processing the input data to provide output data (520) to be represented to the user.

2. The method (400, 500) according to claim 1, further comprising:
capturing one or more data sources (320, 302, 306, 316, 312, 314, 308, 310) from the one or more input devices (402, 404, 406, 408, 410, 412, 414, 416, 418, 420, 422, 424, 426) to capture the input data and the alternative input data, wherein the output is based on a combination of the input data and the alternative input data.

3. The method (400, 500) according to claim 1 or claim 2, wherein the input data is captured based on a user interaction with the platform-based controller on the platform at a moment in time.

4. The method (400, 500) of claim 3, wherein the input data is captured from movement of the hand, fingers, or thumb in respect of the platform-based controller.

5. The method (400, 500) according to any one of the preceding claims, wherein the use by the user of the platform-based controller comprises use of one of a controller, button, touch screen or other haptic controller.

6. The method (400, 500) according to any one of the preceding claims, wherein the hand position is corroborated with the alternative input data to validate the alternative input data.

7. The method (400, 500) according to claim 6, wherein if the hand position is not corroborated with the alternative input data the system implements one of a recalibration and a reset (510) of the system.

8. The method (400, 500) according to claim 6, wherein if the hand position is corroborated with the alternative input data the system implements one of a crosscheck and a recalibration.

9. The method (400, 500) of any preceding claim wherein the input data is captured periodically based on an instruction to the user to use of the platform-based controller.

10. The method (400, 500) according to any one of the preceding claims, wherein providing tracking data to the user comprises at least one of displaying tracking data via a display device (212) and providing haptic feedback.

11. A system (100, 200, 300, 400) for providing tracking data to a user (104) of a platform (110) in an environment, wherein the platform has associated therewith one or more input and output devices (402, 404, 406, 408, 410, 412, 414, 416, 418, 420, 422, 424, 426) configured to track one or more variables of data associated with the user (320, 302, 306, 316, 312, 314, 308, 310), the platform, or the environment; to generate the tracking data; and to provide an output representing the tracking data, the system implementing the method of any preceding claim.

12. The system (100, 200, 300, 400) according to any one of the claims 12 to 19, wherein providing tracking data to the user comprises at least one of displaying tracking data via a display device (408) and a haptic feedback device (424).

13. The system (100, 200, 300, 400) according to any one of claims 12 to 20, wherein the system comprises at least one of a head mounted display (102, 202, 308, 402) a head-down display, and a heads-up display.

14. A head mounted display (102, 202, 308, 402) including a system (100, 200, 300, 400) according to any one of claims 11 or 12.

15. A machine readable medium when executed on a computer is configured to implement the method on any one of claims 1 to 10.
